Europäisches Patentamt

(19) European Patent Office    (11) Publication number: **0 036 257**

Office européen des brevets    **A1**

(12) **EUROPEAN PATENT APPLICATION**

(21) Application number: 81300854.7    (51) Int. Cl.³: **G 01 V 3/10**

(22) Date of filing: 02.03.81

(30) Priority: 05.03.80 GB 8007507
15.10.80 GB 8033244

(43) Date of publication of application:
23.09.81 Bulletin 81/38

(84) Designated Contracting States:
AT BE CH DE FR IT LI LU NL SE

(71) Applicant: Howell, Mark Ian
23 Windsor Court Clifton
Bristol BS8 4LJ(GB)

(72) Inventor: Howell, Mark Ian
23 Windsor Court Clifton
Bristol BS8 4LJ(GB)

(72) Inventor: Chalmers, Andrew Douglas Scott
"The Hebrides" Sheepwood Road Brentry
Bristol BS10 7BS(GB)

(74) Representative: Newstead, Michael John et al,
Haseltine Lake & Co. 28 Southampton Buildings
Chancery Lane
London, WC2A 1AT(GB)

(54) Equipment for monitoring a signal current in an elongate conductor.

(57) Equipment for monitoring a signal current in an elongate underground conductor (5) is disclosed. The equipment comprises first, second and third transducers (1,2 and 3) each responsive to magnetic flux, the transducers being mounted in a spaced-apart manner on a support (4) and having axes which are parallel to each other, so that in use they may be disposed above such a conductor with the said axes horizontal, with the second transducer above the first transducer and the third transducer above the second transducer. The equipment further comprises processing means (6 and 9) for acting on outputs from the transducers to produce an indication of the amplitude of such signal current.

./...

Croydon Printing Company Ltd.

FIG. 1.

-1-

# EQUIPMENT FOR MONITORING A SIGNAL CURRENT IN AN ELONGATE CONDUCTOR

This invention relates to equipment for monitoring a signal current in an elongate conductor.

According to this invention, there is provided equipment for monitoring a signal current in an elongate underground conductor, comprising first, second and third transducers each responsive to magnetic flux, the transducers being mounted in a spaced-apart manner and having axes which are parallel to each other, so that in use they may be disposed relative to such a conductor with the said axes normal to the conductor, with the first transducer nearest the conductor, the third transducer furthest from the conductor and the second transducer between the first and third transducers, the equipment further comprising processing means for acting on outputs from the transducers to produce an indication of the amplitude of such signal current.

The transducers could, for example, be coils. Alternatively, they could, for example, be Hall-effect devices.

The processing means could be arranged for processing a first signal, representative of a difference between a voltage from the third transducer and a voltage from the second transducer, and a second signal, representative of a difference between a voltage from the second transducer and a voltage from the first transducer. In the case that the transducers are coils, the third and second coils could then be wired in anti-phase for producing the first signal and the second and first coils wired in anti-phase for producing the second signal.

The processing means could be arranged for producing an indication of a distance of the equipment from such a conductor. In this case, the processing means could then be arranged for producing the indication of the amplitude of such signal current by deriving an indication proportional to one of the first and second signals or a third signal, representative of a difference between a voltage from the first transducer and a voltage from the third transducer. Preferably, the processing means is arranged for producing an indication of the distance of such a conductor below the first transducer on the basis of the equation:

$$ \underline{d} \;=\; s \left/ \left( \frac{|v1 - v2|}{|v2 - v3|} - 1 \right) \right. $$

where $\underline{d}$ is the said distance, $\underline{s}$ is the separation between the first and third transducers and $\underline{v}1$, $\underline{v}2$ and $\underline{v}3$ are voltages from the first, second and third transducers respectively, the second transducer being substantially midway between the first and third transducers.

Preferably, the processing means includes means for applying a correction factor to compensate for variations of signal current magnetic field strength due to variations in depth of such a conductor.

The processing means could include storage means for storing indications of the amplitude of such signal current. Moreover, the equipment could include display means for displaying a measure of the amplitude of such signal current. Where the equipment has these features and the feature of producing an indication of a distance from such a conductor to the equipment, the processing means and the display means could be such that there can be displayed on the display means measures of the said distance, the amplitude of such signal current, a difference in the amplitude of such signal current between two observation positions, the distance between the two positions and the rate of signal current attenuation (negative or positive) between those positions per unit length of conductor.

The invention will now be described, by way of example, with reference to the accompanying drawings, in which:-

Figure 1 is a schematic diagram of an example of equipment for monitoring a signal current in an elongate underground conductor;

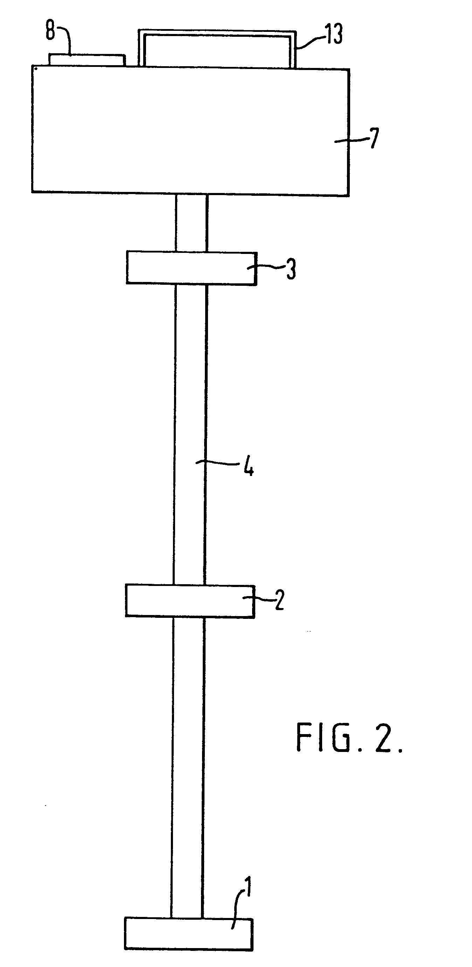

Figure 2 shows how transducers of the equipment are mounted with a housing for processing means of the equipment;

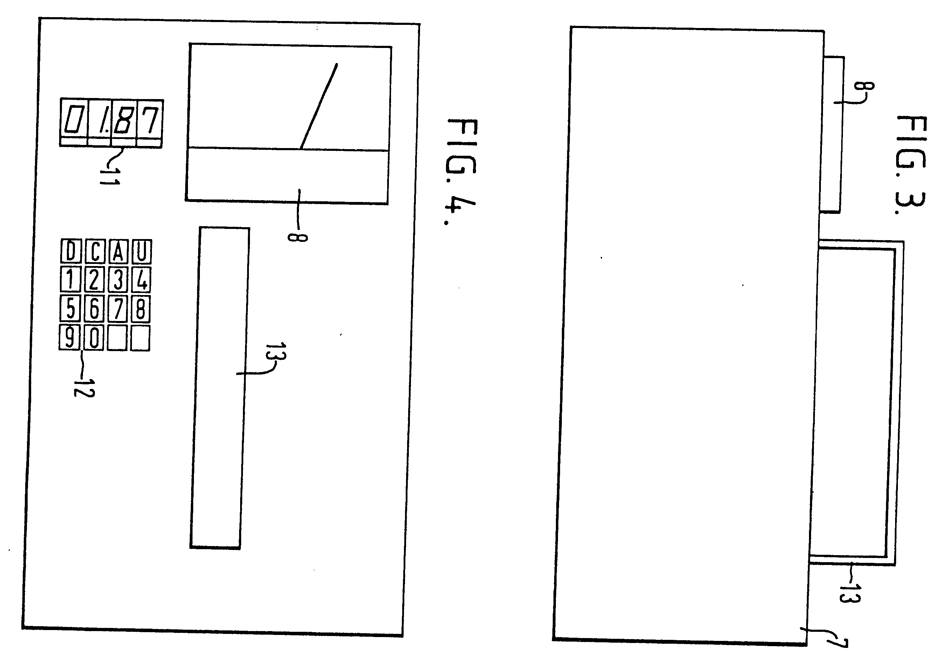

Figure 3 is an enlarged view of the housing; and

Figure 4 is a plan view of a fascia of the housing.

The equipment comprises three transducers 1,2 and 3 each responsive to magnetic flux, mounted on a support 4 in a spaced-apart manner (in the example, equi-distantly spaced apart with a distance of about 23cm between transducers 2 and 1 and 3 and 2) with their axes parallel, so that in use they may be disposed above an elongate underground conductor 5 with their axes horizontal and with transducer 2 above transducer 1 and transducer 3 above transducer 2.

The transducers are connected to a frequency-selective amplifier and switching matrix 6 in processing means in a housing 7. The processing means further includes an analogue meter 8 connected with an output of amplifier and switching matrix 6; a programmed microprocessor 9 connected with another output of the amplifier and matrix 6, an output of the microprocessor being connected with a gain control input 10 of the amplifier and matrix 6; a digital meter 11 connected with another output of the microprocessor 9; and a keyboard 12 connected with another input of the microprocessor 9. The housing 7 has a carrying handle 13 for the equipment.

The purpose of the equipment is to indicate the plan position and depth (or distance from the point of measurement - hereafter referred to as the depth) of the conductor 5, which could be a buried or submerged or otherwise obscured conductor, carrying a signal current, and to measure the amplitude of the signal current at intervals along its length, in order that the positions of local conductive paths between the conductor and its context may be located and quantified.

Possible applications of such equipment are in respect of buried plant such as gas and oil transmission pipelines and electricity transmission cables, where exposure of the pipe wall or cable sheath to soil may result in its corrosion by electrolytic current flow between soil and metal. Such pipelines and cables are normally protected by being wrapped or sheathed by an electrically insulating material but such insulation may suffer local deficiencies in quality as a result of faulty manufacture, damage inflicted during installation, or thereafter by the environment. Where local exposure of metal exists, electrolytes in the soil or other context will almost certainly attack the metal, leading to pitting and possible eventual failure of the pipe or cable-sheath wall.

If an alternating signal current is applied to a buried insulated conductor, the equipment may be used to monitor the field intensity at intervals along the conductor's length, and from this data calculate the conductor's local signal current strengh, and indicate the reduction in signal current amplitude where a local deficiency of the insulator allows the escape of signal current to the context. The magnitude of the signal current escape gives an indication of the magnitude of the area of deficient insulation.

The signal current, of controlled constant amplitude, may be applied to the conductor by direct conductive connection of a signal generator between the conductor and ground or, less commonly, by magnetic mutual induction with a field coil powered by a signal generator resulting in a voltage differential in a section of the conductor and consequent current flow in it due to the leakage paths from the conductor into the soil (or other conductive context).

The Biot and Savart Law ($\emptyset = ki/d$) states that the current flowing in a long straight conductor produces a magnetic field, in a medium of homogeneous permeability, which has flux vectors in a plane perpendicular to the axis of the conductor, in circles concentric with the conductor. The density of the flux vectors is directly proportional to the current amplitude, and inversely proportional to their radial distance from the axis of the conductor. Thus, cylindrical shells of equal flux density are formed co-axially with the conductor.

The signal current frequency should not be so high as to create strong induced secondary currents in conductors nearby the conductor under investigation, nor so low that excessively elaborate and highly sensitive amplifiers are necessary to pick up the signal magnetic field. Neither should the signal frequency be such that equipment is liable to pick up 50 and 60Hz electricity supply harmonics. A frequency which has proved to have good field experimental operating characteristics is around 1000Hz although certain insulating materials may require a lower signal frequency, e.g. epoxy coatings.

The transducers 1,2 and 3 may be of any type having an electrical property or output dependent upon magnetic flux or magnetic flux intensity change, or a function of magnetic flux intensity. For example, Hall-effect devices might prove suitable. However, it has been found that the most practical form of each transducer is a coil, which may be air-cored, or cored by some magnetic material such as iron or ferrite.

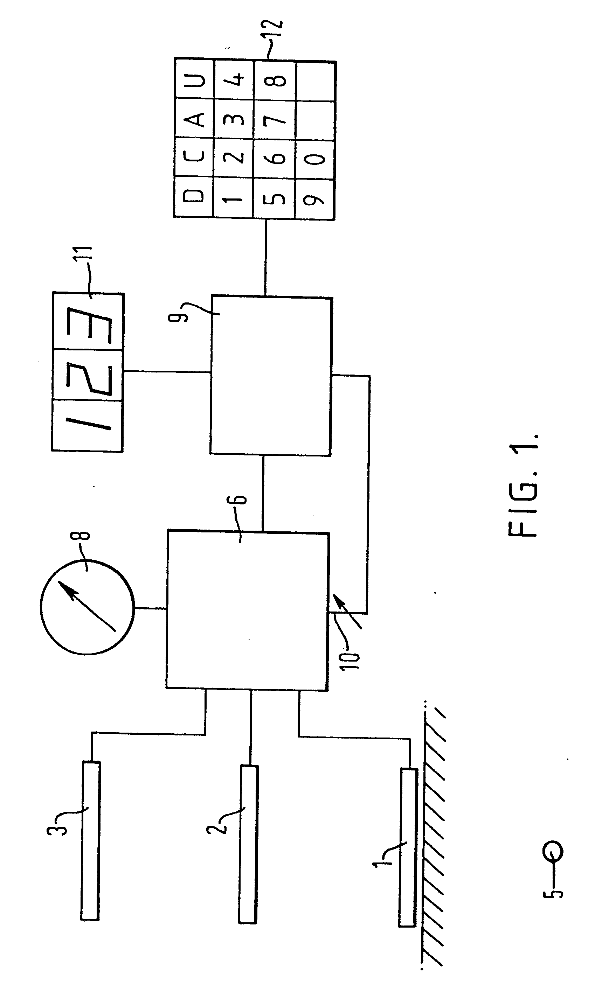

With the transducers 1,2 and 3 one above the other as shown in Figure 1, with horizontal axes parallel to each other and directly over the conductor 5, the following formula exists:

$$\underline{d} = s \left/ \left( \frac{|v1 - v2|}{|v2 - v3|} - 1 \right) \right.$$

or alternatively:

$$\underline{d} = \frac{s(|v2 - v3|)}{|v1 - 2v2 + v3|}$$

where $\underline{d}$ is the depth to the conductor axis, $\underline{s}$ is the separation between transducers 1 and 3, and $\underline{v1}$, $\underline{v2}$ and $\underline{v3}$ are the output voltages of transducers 1,2 and 3 respectively. Although a position for transducer 2 midway between transducers 1 and 3 is the most convenient, other positions might be chosen for reasons of layout contraint and formulae for these other positions could be easily devised. If the transducers 1,2 and 3 are coils, the coils 2 and 3 are wired in anti-phase to produce v2-v3 to be fed to the processing means and coils 1 and 2 are wired in anti-phase to produce v1-v2 to be fed to the processing means. Alternatively, a subtraction of v2 from v1 and a subtraction of v3 from v2 could be carried out in the processing means.

As the depth to the conductor 5 increases, so the signal current magnetic field intensity at the transducers decreases, and vice-versa, so in order to display the true signal current amplitude, the processing means must incorporate means of correcting the received field intensity for variations in depth to the conductor. Since the field intensity is proportional to 1/depth, by adjusting the processing means amplifier gain by a like factor (or by otherwise multiplying the received voltages), variations in field strength due to depth differences may be almost exactly compensated.

It could be convenient in practice to take a standard calibration depth and signal current strength of, say, 1 metre and 500 milliamps respectively (though any distance or current value might be used for this purpose). If 500mA is flowing in the conductor, and the depth is 1 metre, at a gain setting of 2, the depth divided by the gain setting = 1/2 = 0.5A. When the depth increases to, say, 1.75 metres, the displayed signal strength at an unaltered gain setting would be 500 x 1/1.75 = 286mA. If, however, the gain (or other field strength compensating means) is arranged such that a signal magnification factor equal to the depth (1.75) is applied in the processing means, the signal current will read as 286 x 1.75 = 500mA.
The gain or magnification factor will now be 2.0
x 1-75 = 3.5.

If the depth at a third position over the
conductor is 2.1m and the signal current amplitude
has fallen (through current escape to the soil
through an insulation defect) to, say, 341mA, the
depth will still read 2.1m (see equations above).
The signal field strength will be displayed as
341 x 1/2.1 = 162.4 (at a gain setting of 2.0).
Applying the depth correction factor – in this
case 2.1 – in the processing means will result in
the display reading the true signal current amplitude,
i.e. 162.4 x 2.1 = 341mA. The gain setting will
now be 2.0 x 2.1 = 4.2. This depth magnification
compensation factor can be almost instantly applied
to any depth variation within the range of the
equipment. However, such a procedure requires that
an absolute field intensity be measured at one
transducer position, since the reciprocal field
intensity law applies to the absolute field
intensity and not to the field intensity gradient
between two transducer positions.

It will be appreciated that the use of a
single transducer (and the 'reciprocal' depth law)
requiring an absolute field intensity measurement
as a 'reference' to which the depth correction factor
is applied, will risk the result being vitiated by
AC magnetic field interference from such sources
as power cables and transformers. The advantage of
using 'difference' measurements between pairs
of transducers is that such interference is virtually
cancelled once the signal current voltage output
difference between such a pair becomes the basis
of measurements. The relatively nearby signal
source – i.e. the conductor – produces a reasonable signal difference voltage, whereas interference sources even a few metres more distant will produce almost equal output voltages at the transducers, and therefore negligible difference outputs.

Thus, as a three element (or there could be more) transducer array is employed in this equipment, no absolute field strength measurement is required, and the system is highly insensitive to general AC magnetic field interference and consequent false results.

The 'amplitude difference' between the difference outputs of transducer pairs 1 and 2, and 2 and 3, becomes relatively smaller with increasing distance from the conductor than does the absolute field intensity decline with distance. Accordingly, the equipment must be programmed to increase the signal field multiplication factor to a greater amount than the reciprocal of the depth, where the interference-reducing three transducer array is employed, the correction being applied by the microprocessor 9 via the input 10. The correction factor here is:

$$f(d) = \frac{d^2 + d.s}{s}$$

where v1 - v3 x f(d) is a constant, $\underline{d}$ = depth and $\underline{s}$ the distance (normally the vertical separation) between the transducers employed in making the differential current measurement (preferably transducers 1 and 3). If v1 - v3 is used in the processing means to produce a measure of signal current amplitude, the latter being derived from transducers 1 and 3, the difference is obtained in the processing means by subtracting v3 from v1.

Since the normal current losses to ground along a long insulated conductor are quasi-exponential in character, it is the successive current amplitude ratios at successive observation points that are of significance in determining the existence and magnitude of insulation faults. Consequently, the equipment is so arranged that pushing the key A (attenuation) of keyboard 12 causes the displayed current amplitude to be stored in memory in the microprocessor. This current is then either a) multiplied by zero if the memory is empty (i.e. is reading zero) or b) is divided by the pre-existing memory current value (i.e. that current value recorded at the previous observation location) and the operation 20 log of this value applied. This gives the current attenuation in decibels between the present and preceding locations. Alternatively, the operation 2000 log will give the result in millibels, which is a more convenient unit for the expression of the rate of current loss per metre (see below), or for short sections of conductor where the amount of current escape is comparatively low.

Thus presented, a given rate of attenuation figure (rate of attenuation is the attenuation between two observation positions divided by the distance between them) will represent a particular state of insulation condition, regardless of the fact that the absolute current loss through an insulation defect will be the greater, the nearer the defect is to the signal current application position. In other words, it is the ratio of the signal current amplitudes at successive observation positions that is significant in quantifying an insulation defect, rather than the absolute amount of the current escape. An example will show a possible sequence of events:

| At Position | Current Amplitude Reads | Current Amplitude In Memory | Displayed Current divided by Memory Current | Attenuation Over Last Section (x 20 log) | Distance (m) | Attenuation per metre (mB/m) |
|---|---|---|---|---|---|---|
| 1 | 873 | 0 | 0 | 0 | 0 | 0 |
| 2 | 679 | 873 | 0.78 | -2.18 | 857 | 0.25 |
| 3 | 512 | 679 | 0.75 | -2.45 | 644 | 0.38 |
| 4 | 491 | 512 | 0.96 | -0.36 | 192 | 0.19 |
| 5 | 428 | 491 | 0.87 | -1.19 | 579 | 0.21 |
| 6 | 355 | 428 | 0.38 | -1.62 | 454 | 0.36 |

Thus, at each observation position the equipment operator can immediately obtain the following results:

1. Press key D (depth) of keyboard 12

The digital meter 11 displays the depth (distance) to the conductor (usually in metres).

2. Press key C (current) of keyboard 12

The digital meter 11 displays signal current amplitude (usually in milliamperes).

3. Press key A (attenuation) of keyboard 12

The processing means multiplies the displayed current level by zero if the memory is empty, or divides displayed current by the current value in the memory (i.e. the previous observation position current value). The displayed current value is entered into memory. The log of displayed current divided by memory current is calculated, multiplied by 20, and displayed. This is the attenuation in signal current in decibels, between the previous observation position and the present one.

Alternatively, the signal currents may be 'logged' and multiplied by 20 before further computation, and the latest observation subtracted from the previous to give signal current attenuation in decibels.

4.  Press keys 1,2,3,4, (representing distance from previous position) of the keyboard 12

The meter 11 displays distance 1234 (metres).

5.  Press key U of keyboard 12

The processing means divides attenuation by distance and multiplies the result by 100. The meter 11 reads attenuation per unit distance from previous observation position (for example in millibels (per metre - mB/m).

The transducer array must be aligned correctly with respect to the signal magnetic field before current strength observations may be carried out. This is accomplished by observing the analogue meter 8. When it is suspected that the conductor is nearby, the equipment is rotated in azimuth. The meter 8 will indicate a maximum signal when the transducer axes are at right angles (in plan) to the axis of the signal current-carrying conductor. Then, by moving the equipment along the line of the transducer axes thus oriented, the conductor position is indicated by a further maximum analogue meter reading. The observation of signal current strength may then be carried out. Alternatively, two subsidiary coils, ferrite or air-cored, one vertical and one horizontal, could be on the equipment for detecting by indications on meter 8 when the transducers are at right angles to the conductor 5 and directly over the latter.

CLAIMS

1.    Equipment for monitoring a signal current
in an elongate underground conductor, comprising
first, second and third transducers each responsive
to magnetic flux, the transducers being mounted in
a spaced-apart manner and having axes which are
parallel to each other, so that in use they may be
disposed relative to such a conductor with the
said axes normal to the conductor, with the first
transducer nearest the conductor, the third transducer
furthest from the conductor and the second transducer
between the first and third transducers, the
equipment further comprising processing means for
acting on outputs from the transducers to produce
an indication of the amplitude of such signal current.

2.    Equipment according to claim 1, wherein
the transducers are coils.

3.    Equipment according to claim 1 or 2,
wherein the processing means is arranged for
processing a first signal, representative of a
difference between a voltage from the third transducer
and a voltage from the second transducer, and a
second signal, representative of a difference
between a voltage from the second transducer and a
voltage from the first transducer.

4.    Equipment according to claims 2 and 3,
wherein the third and second coils are wired in
anti-phase for producing the first signal and the
second and first coils are wired in anti-phase for
producing the second signal.

5.    Equipment according to any preceding claim,
wherein the processing means is arranged for producing
an indication of a distance of the equipment from
such a conductor.

6.    Equipment according to claims 3 and 5 or
claims 4 and 5, wherein the processing means is arranged for producing an indication of the distance of such a conductor below the first transducer on the basis of the equation:

$$d = s \left/ \left( \frac{|v1 - v2|}{|v2 - v3|} - 1 \right) \right.$$

where $d$ is the said distance, $s$ is the separation between the first and third transducers and v1, v2 and v3 are voltages from the first, second and third transducers respectively, the second transducer being substantially midway between the first and third transducers.

7. Equipment according to claim 3 or any of claims 4 to 6 as dependent on claim 3, wherein the processing means is arranged for producing the indication of the amplitude of such signal current by deriving an indication proportional to one of the first and second signals or a third signal, representative of a difference between a voltage from the first transducer and a voltage from the third transducer.

8. Equipment according to any preceding claim, wherein the processing means includes means for applying a correction factor to compensate for variations of signal current magnetic field strength due to variations in depth of such a conductor.

9. Equipment according to any preceding claim, wherein the processing means includes storage means for storing an indication of the amplitude of such signal current.

10. Equipment according to any preceding claim, including display means for displaying a measure of the amplitude such signal current.

11. Equipment according to claims 9 and 10 as dependent on any of claims 5 to 8, wherein the processing means and the display means are such that there can be displayed on the display means measures of the said distance, the amplitude of such signal current, a difference in the amplitude of such signal current between two observation positions, the distance between the two positions and the rate of signal current attenuation (negative or positive) between those positions per unit length of conductor.

FIG. 1.

0036257

0036257

FIG. 2.

FIG. 3.

FIG. 4.

European Patent Office

**EUROPEAN SEARCH REPORT**

Application number

EP 81 30 0854

| | DOCUMENTS CONSIDERED TO BE RELEVANT | | CLASSIFICATION OF THE APPLICATION (Int Cl ) |
|---|---|---|---|
| Category | Citation of document with indication, where appropriate, of relevant passages | Relevant to claim | |
| | US - A - 3 617 865 (G. HAKATA)<br><br>* Column 2, lines 22-69; column 6, lines 20-75; figures 1-4 *<br><br>-- | 1-5,7, 11 | G 01 V 3/10 |
| | BELL LABORATORIES RECORD, november 1965, vol. 43<br>Murray Hill, US<br>C. YOUNG: "Measuring the depth of buried cables", pages 399-401<br><br>* Whole article *<br><br>-- | 1-5,7, 11 | |
| | | | **TECHNICAL FIELDS SEARCHED (Int. Cl.³)** |
| A | US - A - 4 130 791 (C. SLOUGH et E. ROMERO)<br><br>* Abstract; figure 1 *<br><br>-- | 1,2 | G 01 V 3/06<br>3/02<br>3/10<br>3/08 |
| A | US - A - 4 039 938 (J. LINK)<br><br>* Abstract; figure 1 *<br><br>-- | 1 | |
| A | US - A - 4 112 349 (H. WEBER)<br><br>* Column 1, lines 9-57; figure 1 *<br><br>-- | 1,2 | |
| A | US - A - 2 051 054 (J. MUNTON et W. REEVES)<br><br>* Column 2, lines 56-64; figure 1 *<br><br>---- | 1 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | | | | |
|---|---|---|---|---|
| | The present search report has been drawn up for all claims | | | |
| Place of search<br>The Hague | Date of completion of the search<br>30-06-1981 | | Examiner<br>GALLO | |

EPO Form 1503.1   06.78